# FASCICULE DE BREVET EUROPEEN

(11) **EP 0 561 704 B1**
(45) Date de publication et mention de la délivrance du brevet: **23.04.1997**
(21) Numéro de dépôt: 93400687.5
(22) Date de dépôt: 17.03.1993
(51) Int. Cl.: B60G 15/06, F16C 19/10, F16C 35/06

(54) **Roulement de butée de suspension pour véhicule et son procédé de montage**
Axialwälzlager für Fahrzeugaufhängung und sein Montageverfahren
Axial rolling bearing for a vehicle suspension and its mounting method

(30) Priorité: 19.03.1992 FR 9203298
(43) Date de publication de la demande: 22.09.1993
(73) Titulaire: SKF FRANCE, F-92142 Clamart Cédex (FR)
(72) Inventeur: Caron, Fabrice, F-78120 Montigny-le-Bretonneux (FR)
(74) Mandataire: Casalonga, Axel

(56) Documents cités:
- EP-A- 0 278 354
- EP-A- 0 420 219
- WO-A-86/05633
- FR-A- 2 091 152
- FR-A- 2 389 036
- FR-A- 2 527 283
- FR-A- 2 630 375
- FR-A- 2 665 494

## Description

La présente invention concerne un roulement de butée de suspension pour véhicule ainsi que son procédé de montage.

Les roulements de butée de suspension sont couramment utilisés dans les dispositifs de suspension de roues directrices de véhicule automobile. D'une manière générale le roulement de butée de suspension est logé entre une coupelle supérieure fixe solidaire de la carrosserie du véhicule par l'intermédiaire d'un bloc de caoutchouc amortisseur, et une coupelle inférieure mobile en rotation sur laquelle vient en appui l'extrémité supérieure du ressort de suspension entourant l'amortisseur du dispositif de suspension, l'extrémité inférieure de ce ressort venant porter sur une autre coupelle solidaire du cylindre amortisseur.

Le roulement de butée de suspension a pour fonctions essentielles de transmettre les efforts axiaux et radiaux résultant de la compression du ressort de suspension, et d'autoriser en même temps une rotation pratiquement sans frottement entre le ressort de suspension et la carrosserie du véhicule, ce mouvement de rotation du ressort se produisant lors du braquage des roues directrices et dans une proportion moindre lors de variations de compression du ressort par un effet d'enroulement des spires.

Le type de roulement généralement utilisé pour cette application est un roulement comportant deux bagues en tôle, des billes de roulement, une cage de maintien des billes, un moyen de liaison axiale entre les bagues, et des moyens d'étanchéité afin de protéger l'intérieur du roulement contre les projections d'eau et de salissures diverses fréquentes dans cette zone du véhicule.

On connaît par le document FR-2 630 375 un roulement de butée de suspension du type précité comprenant un manchon de solidarisation axiale des deux bagues emmanché à l'intérieur des bagues supérieure et inférieure du roulement. Ce manchon assure d'une part la retenue axiale des bagues supérieure et inférieure et de la coupelle inférieure du dispositif de suspension et d'autre part l'étanchéité de l'ensemble contre les projections d'eau extérieures.

Par ailleurs, ce même document décrit un procédé de montage dudit roulement de butée de suspension dans lequel la coupelle supérieure étant en position retournée, on y introduit par la partie supérieure l'ensemble manchon-cage par emmanchement à force, on dépose les billes dans les alvéoles de la cage, on place au-dessus de l'ensemble la bague inférieure en position retournée en appui sur le second bourrelet, puis on rapproche par poussée axiale sur les deux bagues de roulement afin d'assurer à la fois la rupture des plots de liaison, l'accrochage du bord intérieur de la bague inférieure au-delà du second bourrelet, et la déformation élastique conique de la bague initialement sensiblement plane, enfin le montage en position d'utilisation du roulement sur la coupelle inférieure par emmanchement de l'ensemble du roulement sur le bord intérieur de la coupelle inférieure grâce au troisième bourrelet annulaire, avant d'introduire le tout en position dans la coupelle supérieure.

Un tel roulement de butée de suspension étant solidarisé sur la coupelle inférieure du dispositif de suspension, le remplacement de ce dispositif ne peut être envisagé sans démontage du roulement de la carrosserie du véhicule. Il en résulte que le roulement de butée de suspension peut être détérioré lors des opérations de remplacement du dispositif de suspension.

Afin de résoudre ce genre de problème, une solution a été proposée dans le document FR-2 617 252 selon laquelle un joint d'étanchéité est monté entre les bagues supérieure et inférieure du roulement et extérieurement à la bague inférieure. Le joint comprend des lèvres d'étanchéité circulaires radiale et axiale et des griffes de retenue axiale des bagues du roulement sur la carrosserie du véhicule. Ainsi, le remplacement du dispositif de suspension ne nécessite pas le démontage du roulement de butée de suspension qui reste solidaire de la carrosserie.

Cependant, la conception de ce roulement de butée de suspension nécessite des ouvertures périphériques sous forme d'encoches et de fenêtres sur la bague supérieure du roulement afin de permettre d'une part l'assemblage axial entre les deux bagues par une première série de griffes coopérant avec les fenêtres périphériques, et concurrement avec des lèvres d'étanchéité circulaires radiales, et d'autre part la retenue axiale du roulement sur la carrosserie du véhicule par l'intermédiaire de la deuxième série de griffes traversant les encoches périphériques de la bague supérieure, le joint d'étanchéité étant situé radialement entre le bord extérieur de la bague inférieure et le bord extérieur de la bague supérieure.

L'inconvénient majeur de ce roulement de butée de suspension est, d'une part, de nécessiter la découpe d'encoches et de fenêtres dans la bague supérieure venant en appui sur la carrosserie du véhicule, d'autre part, dans le cas où le roulement comporte une cage, cette dernière constitue alors une pièce supplémentaire distincte à fabriquer et à assembler en plus du joint d'étanchéité.

Par ailleurs, on connaît par le document FR-2 665 494 un roulement axial pour suspension à amortisseur de véhicule automobile dans lequel est prévue une frette métallique qui assure l'assemblage des bagues supérieure et inférieure et la retenue axiale du roulement dans la cavité d'un élément de carrosserie du véhicule. Le montage de la frette métallique nécessite des moyens mécaniques et thermiques de frettage et de pliage de la tôle métallique constituant la frette.

Tel que revendiqué, le roulement de butée de suspension pour véhicule comporte une bague supérieure, une bague inférieure, des billes de roulement disposées entre les bagues supérieure et inférieure, une cage pour les billes et un élément de solidarisation axiale des deux bagues, ledit roulement étant destiné à être placé entre une coupelle supérieure fixe solidaire de la carrosserie du véhicule et une coupelle inférieure mobile en rotation servant d'appui à un ressort de suspension entourant un cylindre d'amortisseur du véhicule, l'élément de solidarisation présente la forme d'un fourreau sensiblement cylindrique comportant des moyens intérieurs d'accrochage permettant, après emmanchement à force dudit fourreau autour du bord extérieur de la bague supérieure, d'assurer la solidarisation axiale dudit fourreau avec la bague supérieure, le fourreau devant également être emmanché à force dans le bord intérieur de la coupelle supérieure pour assurer la retenue axiale du roulement de butée dans cette dernière.

Selon l'invention, l'élément de solidarisation est en matière plastique pouvant être déformé élastiquement, l'emmanchement à force du fourreau autour du bord extérieur de la bague extérieure et l'emmanchement à force du fourreau dans le bord intérieur de la coupelle supérieure sont obtenus par déformation élastique du fourreau, les moyens d'accrochage assurant la solidarisation axiale du fourreau avec la bague supérieure par leur déformation élastique autour du bord extérieur de cette dernière et la cage et le fourreau sont susceptibles d'être réalisés par moulage en une seule pièce par injection d'une matière plastique, la cage et le fourreau étant reliés par des plots de liaison répartis circonférentiellement entre le bord extérieur de la cage et le bord intérieur d'une lèvre annulaire radiale intérieure à l'extrémité inférieure du fourreau, les plots de liaison étant rompus lors de l'assemblage de la bague inférieure

Tel que revendiqué, le procédé de montage et de mise en place d'un roulement de butée de suspension destiné à être placé entre une coupelle supérieure fixe solidaire de la carrosserie d'un véhicule et une coupelle inférieure mobile en rotation servant d'appui à un ressort de suspension entourant un cylindre d'amortisseur du véhicule, ledit roulement comprenant une bague supérieure, une bague inférieure, des billes de roulement disposées entre les bagues supérieure et inférieure, une cage pour les billes, et un élément de solidarisation axiale des deux bagues comprend les étapes suivantes: on moule, par injection, une pièce en matériau plastique pouvant être déformée élastiquement, formant l'élément de solidarisation en forme de fourreau sensiblement cylindrique muni de moyens intérieurs d'accrochage et la cage reliée par des plots de liaison, on monte la pièce moulée constituée de la cage et du fourreau sur la bague supérieure en emmanchant à force le fourreau sur la bague supérieure jûsqu'à ce que celle-ci bute axialement sur la lèvre annulaire inférieure du fourreau, on introduit les billes de roulement dans les alvéoles de la cage, on assemble la bague inférieure par poussée axiale pour séparer la cage du fourreau en rompant les plots de liaison et on emmanche à force l'ensemble ainsi obtenu sur un bord de la coupelle supérieure. Selon l'invention, les plots de liaison étant répartis circonférentiellement entre le bord intérieur d'une lèvre annulaire radiale qui s'étend vers l'intérieur du fourreau et un bord extérieur de la cage, l'emmanchement s'effectue autour du bord extérieur de la bague supérieure; l'élément de solidarisation est muni de moyens d'accrochage, qui viennent maintenir la bague supérieure par déformation élastique autour de son bord extérieur; enfin, l'ensemble ainsi obtenu est emmanché sur un bord intérieur de la coupelle supérieure par déformation élastique du fourreau qui maintient en place le roulement dans la coupelle supérieure.

Les moyens intérieurs et extérieurs d'accrochage peuvent être sous forme d'un bourrelet annulaire ou d'ergots ou protubérances individuels répartis circonférentiellement sur le fourreau.

De préférence, les moyens intérieurs et/ou extérieurs d'accrochage sont situés au voisinage de l'extrémité supérieure du fourreau. L'extrémité inférieure du fourreau comporte une lèvre annulaire radiale intérieure qui est reliée à la cage par des plots de liaison pourvus chacun d'une zone à section faible. Le montage axial de la bague inférieure du roulement provoque la séparation entre la cage et la lèvre annulaire radiale intérieure du fourreau au niveau des zones à sections faibles des plots de liaison. Avantageusement, le fourreau et la cage sont obtenus par moulage en une seule pièce par injection de matière plastique.

Il est possible de rendre le fourreau déformable élastiquement dans son épaisseur, de façon à permettre la retenue de la bague supérieure du roulement dans la coupelle supérieure lorsque le fourreau est emmanché entre lesdites bague et coupelle.

Pour améliorer la retenue axiale du roulement de butée, la coupelle supérieure peut comporter dans son bord intérieur d'emmanchement, des logements pour les éléments élastiques extérieurs d'accrochage. Les logements peuvent être sous forme d'évidements ou fenêtres individuels répartis circonférentiellement qui permettent en outre un indexage angulaire du roulement dans la coupelle supérieure, ou sous forme d'une rainure annulaire.

Grâce à l'invention, on réalise un roulement de butée de suspension qui intègre un élément de solidarisation axiale des bagues permettant une manipulation aisée du roulement, et qui présente une bonne étanchéité vis-à-vis des pollutions, par exemple des projections d'eau et d'impuretés diverses, auxquelles il est exposé. L'élément de solidarisation axiale des bagues permet également d'immobiliser le roulement de butée de suspension dans la coupelle supérieure du dispositif de suspension du véhicule, ce qui présente comme avantage particulier de simplifier d'une part les opérations d'assemblage sur véhicule chez le constructeur, et d'autre part les opérations éventuelles de changement des amortisseurs chez les utilisateurs ou garagistes.

Pour les opérations d'assemblage chez le constructeur de véhicule, on place le roulement de butée de suspension dans la coupelle supérieure et, le roulement de butée étant immobilisé dans ladite coupelle supérieure, il est facile de procéder ensuite à la mise en place de la coupelle inférieure et d'autres éléments sans avoir à se soucier du maintien du roulement de butée dans la coupelle extérieure. Pour les opérations de changement d'amortisseur, on peut librement procéder au démontage et au remontage des pièces pour le remplacement de l'amortisseur sans avoir à toucher au roulement de butée de suspension qui reste immobilisé dans la coupelle supérieure. On évite ainsi une perte de temps et tout risque d'endommagement du roulement de butée de suspension.

L'invention sera mieux comprise à l'étude de la description détaillée de quelques modes de réalisation pris à titre d'exemples nullement limitatifs et illustrés par les dessins annexés, sur lesquels :
la figure 1 est une vue en coupe axiale du roulement de butée de suspension selon l'invention en position assemblée entre la coupelle supérieure et la coupelle inférieure du dispositif de suspension d'un véhicule;
la figure 2 est une vue partielle en détail de la figure 1;
la figure 3 est une vue partielle en détail de la figure 4;
la figure 4 est une vue dans le sens axial du roulement de butée de suspension de la figure 1 avant le montage de la bague inférieure;
la figure 5 est une vue de détail en coupe axiale du roulement au cours de la première étape de montage;
la figure 6 est une vue de détail en coupe axiale du roulement selon une deuxième étape de montage;
la figure 7 est une vue de détail en coupe axiale du roulement selon une troisième étape du montage;
la figure 8 est une vue partielle en détail équivalente à la figure 2 selon un second mode de réalisation de l'invention;
la figure 9 est une vue partielle en détail équivalente à la figure 2 selon un troisième mode de réalisation de l'invention;
la figure 10 est une vue partielle en détail équivalente à la figure 2 selon un quatrième mode de réalisation de l'invention; et
la figure 11 est une vue partielle en détail du fourreau et de la cage de la figure 10 avant le montage du roulement.

Comme illustré sur les figures, le roulement de butée de suspension est monté axialement entre une coupelle supérieure 1 solidaire de la carrosserie non représentée du véhicule, et une coupelle inférieure 2 mobile en rotation du dispositif de suspension non représenté. Le roulement de butée de suspension comprend une bague supérieure 3, une bague inférieure 4, des billes de roulement 5 disposées entre la bague supérieure 3 et la bague inférieure 4, une cage 6 assurant un espacement circonférentiel régulier entre les billes 5, et un fourreau 7 d'immobilisation axiale par rapport à la coupelle supérieure 1 et d'assemblage axial des bagues supérieure 3 et inférieure 4. L'ensemble formé par le roulement, la coupelle supérieure 1 et la coupelle inférieure 2 présentent une symétrie de révolution autour d'un axe 8.

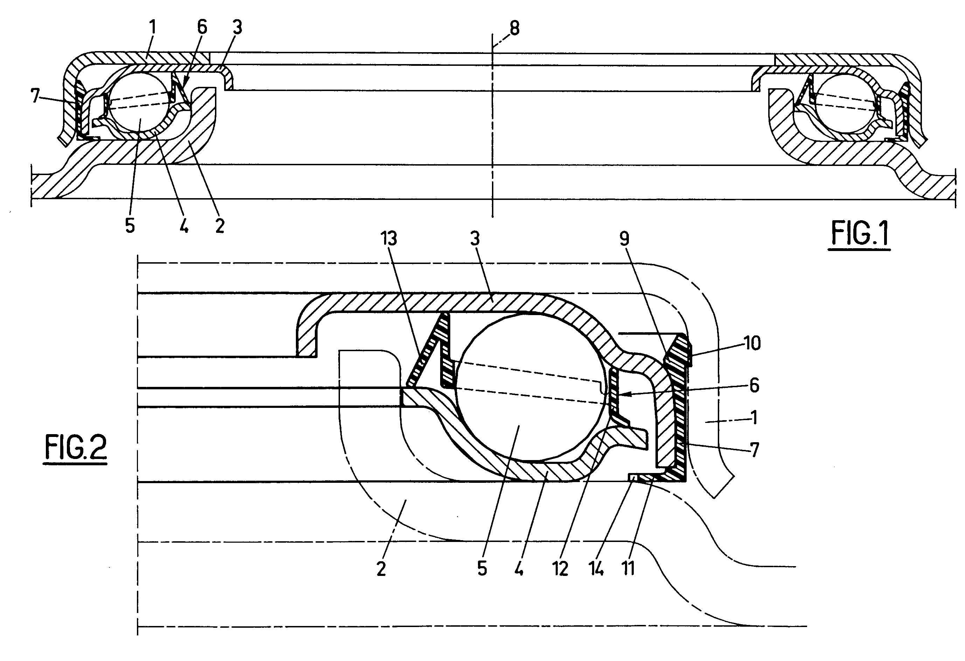

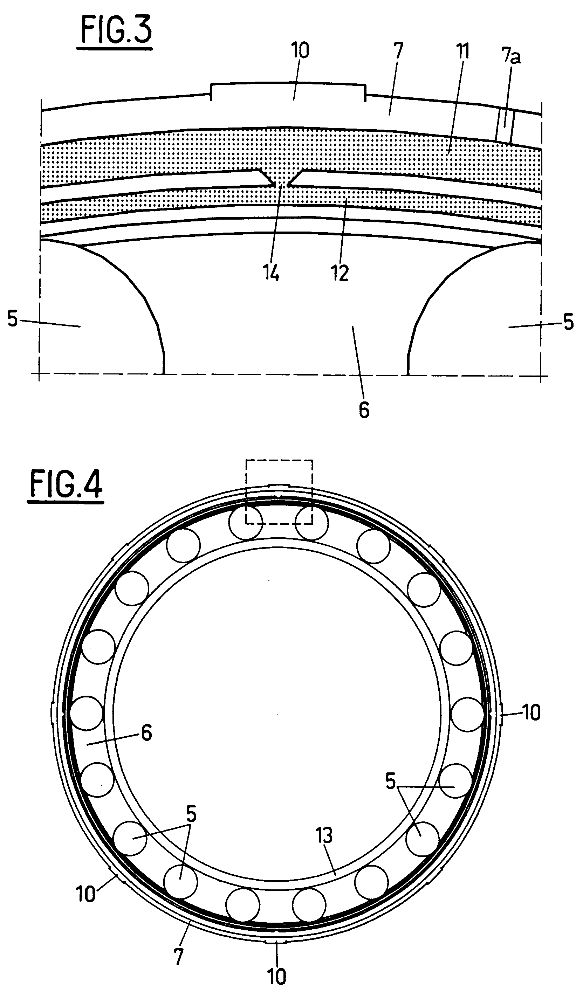

Selon le mode illustré sur les figures 1 à 7, le fourreau 7 présente un bourrelet annulaire intérieur 9, des protubérances radiales 10 réparties circonférentiellement sur la face extérieure du fourreau. Le bourrelet 9 et les protubérances 10 sont situés au voisinage de l'extrémité supérieure du fourreau 7. Le fourreau 7 pourra éventuellement comporter des fentes axiales 7a aménagées entre l'extrémité supérieure du fourreau et la base du bourrelet 9 afin de donner un peu plus d'élasticité au fourreau dans le sens radial et faciliter son montage sur la bague supérieure 3 (voir figure 3). L'extrémité inférieure du fourreau 7 comporte une lèvre annulaire intérieure 11 s'étendant radialement.

La cage 6 comporte une lèvre d'étanchéité extérieure 12 et une lèvre d'étanchéité intérieure 13. Les lèvres d'étanchéité 12 et 13 de la cage 6 assurent l'étanchéité des billes de roulement 5 et de la graisse de lubrification vis-à-vis de l'extérieur du roulement.

La cage 6 et le fourreau 7 sont obtenus par moulage en une seule pièce par injection d'une matière plastique. La liaison entre le fourreau 7 et la cage 6 est assurée par des plots de liaison 14 répartis circonférentiellement entre le bord intérieur de la lèvre annulaire radiale intérieure 11 du fourreau 7 et le bord extérieur de l'extrémité inférieure de la lèvre d'étanchéité extérieure 12 de la cage 6 (voir figures 3, 4 et 5). Les plots de liaison 14 comportent chacun une zone à section faible permettant la rupture à force des plots de liaison 14 pour séparer la cage 6 du fourreau 7.

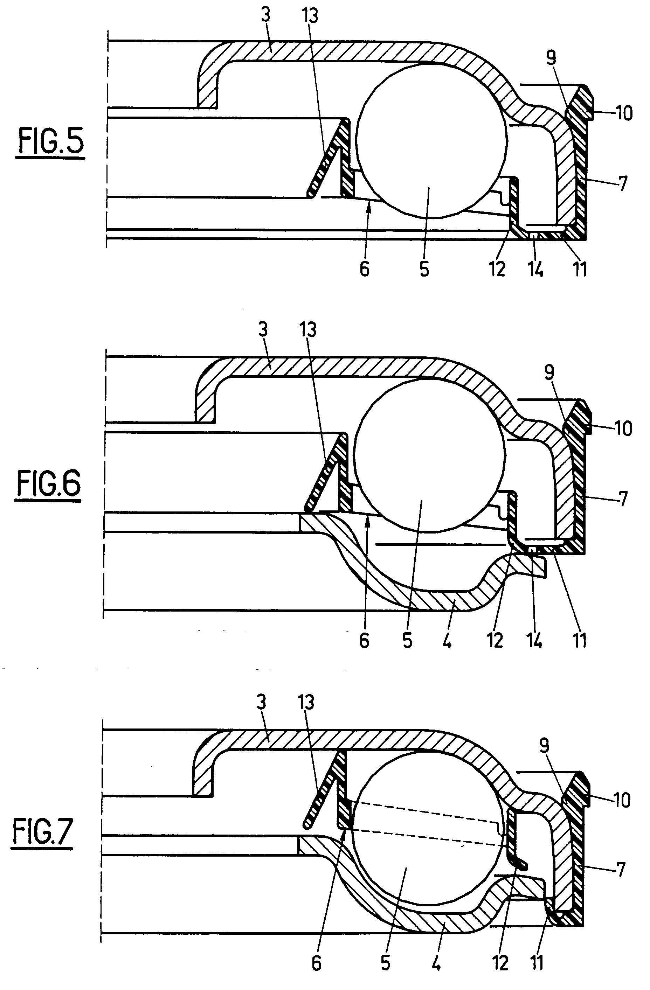

Le montage du roulement de butée de suspension s'effectue de la façon suivante. La pièce unique constituée par le fourreau 7 et la cage 6 est d'abord montée sur la bague supérieure 3 par l'intermédiaire du fourreau 7 qui s'emmanche sur le bord extérieur de la bague supérieure par déformation élastique du fourreau. Le mouvement d'emmanchement du fourreau 7 autour de la bague supérieure 3 est limité par la base de la lèvre annulaire intérieure 11 du fourreau qui forme ainsi une butée axiale à l'extrémité inférieure du bord extérieur de la bague supérieure 3. Le bourrelet annulaire intérieur 9 du fourreau 7 maintient la bague extérieure 3 par serrage élastique autour du bord extérieur de cette dernière. Les billes de roulement 5 sont ensuite disposées dans les alvéoles de la cage 6 et en contact avec le chemin de roulement de la bague supérieure 3 (figure 5). La bague inférieure 4 est ensuite mise en place coaxialement à la bague supérieure 3 en provoquant par son bord extérieur un cisaillement des zones de sections faibles des plots de liaison 14 et la désolidarisation de la cage 6 et du fourreau 7 (figures 6 et 7). La lèvre annulaire radiale intérieure 11 revient à sa place après le passage du bord extérieur de la bague inférieure 4 et empêche cette dernière de se désolidariser axialement de la bague supérieure 3, car le diamètre du bord intérieur de la lèvre 11 est inférieur au diamètre du bord extérieur de la bague inférieure 4.

La mise en place et l'immobilisation du roulement de butée de suspension dans la coupelle supérieure 1 s'effectuent par une simple poussée axiale sur le roulement qui vient ainsi se loger dans la coupelle supérieure 1 par serrage élastique des protubérances radiales 10 du fourreau 7 sur la surface cylindrique interne de la coupelle supérieure 1. Le montage du dispositif de suspension non représenté pourvu de la coupelle inférieure 2 se fait axialement. La coupelle inférieure 2 présente une surface d'appui axiale qui entre en contact avec la bague inférieure 4 en la maintenant à une distance fixe par rapport à la bague supérieure 3, les lèvres d'étanchéité 12, 13 de la cage 6 assurant l'étanchéité du roulement. De façon avantageuse, la lèvre annulaire radiale intérieure 11 du fourreau 7 peut coopérer avec la surface d'appui axiale de la coupelle inférieure 2 en formant ainsi un joint d'étanchéité (figure 2).

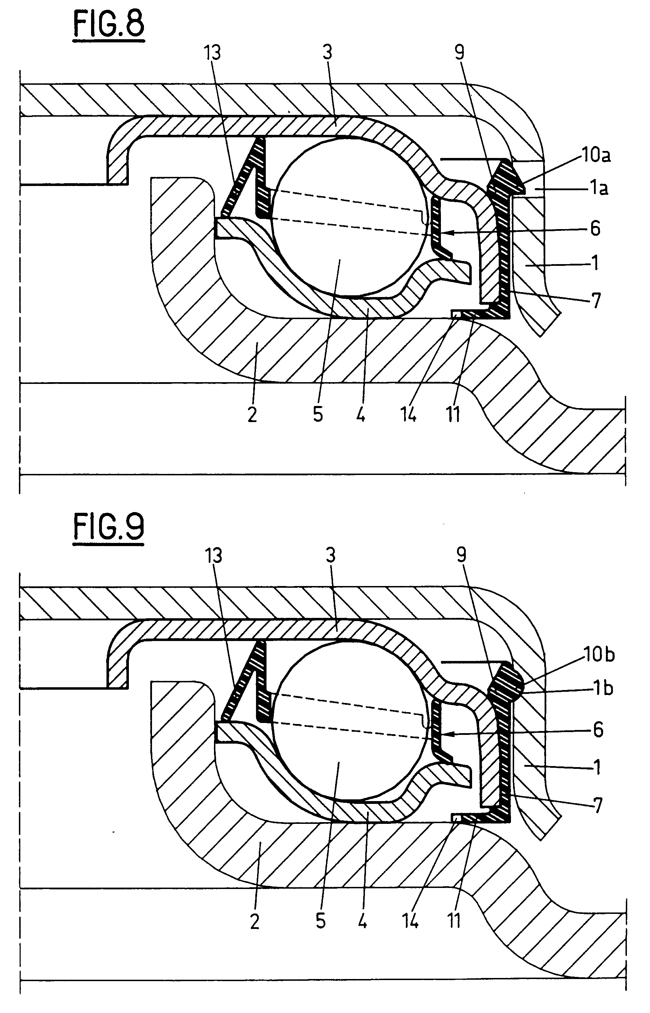

Sur la figure 8 est montée un mode de réalisation de l'invention qui ne diffère du mode précédemment décrit que dans la structure des éléments élastiques extérieurs d'accrochage et dans la structure du bord intérieur de la coupelle supérieure 1. Les protubérances radiales 10 sont remplacées par des ergots individuels 10a sous forme de crochets qui coopèrent avec des fenêtres indivuelles 1a réparties circonférentiellement dans la coupelle supérieure 1. Les ergots 10a s'accrochent aux fenêtres 1a et assurent ainsi la retenue axiale et l'indexage angulaire du roulement dans la coupelle supérieure 1.

La figure 9 montre une variante de réalisation similaire à la figure 8. Les ergots 10a sont remplacés par des éléments élastiques 10b sous forme d'un bourrelet annulaire ou de plusieurs protubérances radiales arrondies réparties circonférentiellement. Le bord intérieur de la coupelle supérieure 1 comporte, de manière adéquate, des logements 1a sous forme d'une rainure annulaire ou de plusieurs évidements répartis circonférentiellement pour coopérer avec les éléments élastiques 10b du fourreau 7 afin d'assurer la retenue axiale du roulement dans la coupelle supérieure 1.

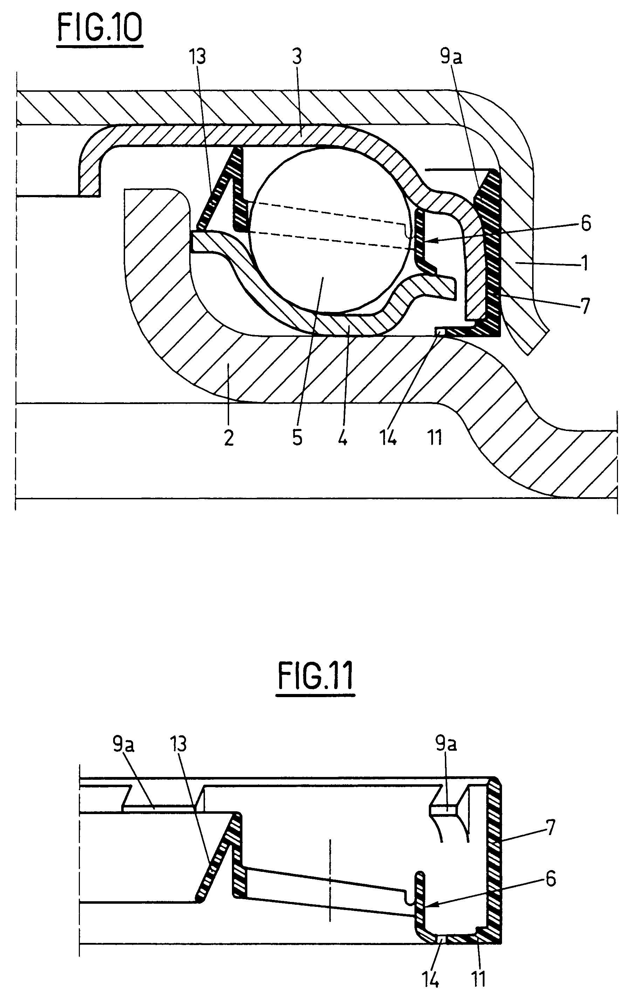

Les figures 10 et 11 illustrent un autre mode de réalisation de l'invention avec un fourreau 7 qui travaille en compression radiale par la déformation élastique dans son épaisseur afin d'assurer la retenue axiale du roulement dans la coupelle supérieure 1. Pour ce faire, le diamètre du fourreau cylindrique 7 doit être légèrement supérieur au diamètre intérieur de la coupelle supérieure 1. Les éléments élastiques intérieurs du fourreau 7 sont sous forme d'ergots radiaux individuels 9a répartis circonférentiellement. Ces ergots intérieurs 9a peuvent remplacer ou peuvent être remplacés par le bourrelet annulaire intérieur 9 dans les modes décrits ci-dessus.

## Revendications

1. Roulement de butée de suspension pour véhicule comportant une bague supérieure (3), une bague inférieure (4), des billes de roulement (5) disposées entre les bagues supérieure et inférieure, une cage (6) pour les billes et un élément (7) de solidarisation axiale des deux bagues, ledit roulement étant destiné à être placé entre une coupelle supérieure fixe (1) solidaire de la carrosserie du véhicule et une coupelle inférieure (2) mobile en rotation servant d'appui à un ressort de suspension entourant un cylindre d'amortisseur du véhicule, l'élément de solidarisation (7) présente la forme d'un fourreau (7) sensiblement cylindrique comportant des moyens intérieurs d'accrochage (9, 9a) permettant, après emmanchement à force dudit fourreau autour du bord extérieur de la bague supérieure (3), d'assurer la solidarisation axiale dudit fourreau avec la bague supérieure, le fourreau devant également être emmanché à force dans le bord intérieur de la coupelle supérieure (1) pour assurer la retenue axiale du roulement de butée dans cette dernière,
caractérisé par le fait que l'élément de solidarisation (7) est en matière plastique pouvant être déformé élastiquement,
par le fait que l'emmanchement à force du fourreau autour du bord extérieur de la bague extérieure et l'emmanchement à force du fourreau dans le bord intérieur de la coupelle supérieure sont obtenus par déformation élastique du fourreau , les moyens d'accrochage (9, 9a) assurant la solidarisation axiale du fourreau avec la bague supérieure (3) par leur déformation élastique autour du bord extérieur de cette dernière et par le fait que la cage (6) et le fourreau (7) sont susceptibles d'être réalisés par moulage en une seule pièce par injection d'une matière plastique, la cage et le fourreau étant reliés par des plots de liaison (14) répartis circonférentiellement entre le bord extérieur de la cage et le bord intérieur d'une lèvre annulaire radiale intérieure (11) à l'extrémité inférieure du fourreau, les plots de liaison étant rompus lors de l'assemblage de la bague inférieure (4).

2. Roulement selon la revendication 1, caractérisé par le fait que les moyens intérieurs d'accrochage du fourreau (7) sont réalisés sous forme d'ergots individuels (9a) s'étendant radialement vers l'intérieur du fourreau et répartis circonférentiellement à la surface intérieure du fourreau.

3. Roulement selon la revendication 1, caractérisé par le fait que les moyens intérieurs d'accrochage du fourreau (7) sont réalisés sous forme d'un bourrelet intérieur annulaire (9).

4. Roulement selon l'une des revendications précédentes, caractérisé par le fait que le fourreau (7) présente une déformation élastique radiale dans son épaisseur lorsqu'il est emmanché entre la bague supérieure (3) et la coupelle supérieure (1).

5. Roulement selon l'une des revendications 1 à 3, caractérisé par le fait que le fourreau (7) comporte des éléments élastiques extérieurs d'accrochage (10, 10a, 10b) sur sa surface extérieure.

6. Roulement selon la revendication 5, caractérisé par le fait que les éléments élastiques extérieurs d'accrochage du fourreau (7) sont réalisés sous forme de protubérances ou ergots individuels (10, 10a) répartis circonférentiellement à la surface extérieure du fourreau pour permettre son emmanchement à force dans la coupelle supérieure (1).

7. Roulement selon la revendication 5, caractérisé par le fait que les éléments élastiques extérieurs d'accrochage du fourreau (7) sont réalisés sous forme d'un bourrelet extérieur annulaire.

8. Roulement selon l'une des revendications précédentes, caractérisé par le fait que les moyens intérieurs et/ou les éléments élastiques extérieurs d'accrochage sont situés au voisinage de l'extrémité supérieure du fourreau (7).

9. Roulement selon l'une des revendications précédentes, caractérisé par le fait que la lèvre annulaire radiale intérieure (11) de l'extrémité inférieure du fourreau (7) présente une butée axiale pour le mouvement d'emmanchement du fourreau (7) sur la bague supérieure (3).

10. Roulement selon l'une des revendications précédentes, caractérisé par le fait que l'extrémité inférieure du fourreau (7) comportant la lèvre annulaire intérieure (11) forme un joint d'étanchéité avec la coupelle inférieure (2).

11. Roulement selon la revendication 9 ou 10, caractérisé par le fait que la lèvre annulaire radiale intérieure (11) du fourreau (7) empêche la désolidarisation axiale de la bague intérieure (4) par rapport à la bague supérieure (3).

12. Roulement selon l'une des revendications précédentes, caractérisé par le fait que la cage (6) présente une lèvre d'étanchéité extérieure (12) et une lèvre d'étanchéité inférieure (13) assurant l'étanchéité des billes de roulement (5) vis-à-vis de l'extérieur du roulement.

13. Roulement selon l'une des revendications précédentes, caractérisé par le fait que le fourreau (7) comporte des fentes axiales (7a) aménagées entre l'extrémité supérieure du fourreau et la base du bourrelet intérieur annulaire (9).

14. Assemblage de roulement de butée comprenant une coupelle supérieure fixe (1) solidaire de la carrosserie d'un véhicule, une coupelle inférieure (2) mobile en rotation servant d'appui à un ressort amortisseur du véhicule et un roulement de butée selon l'une des revendications 5 à 7, caractérisé par le fait que la coupelle supérieure (1) est pourvue dans son bord intérieur d'emmanchement de logements pour les éléments élastiques extérieurs d'accrochage du fourreau (7) du roulement de butée, lesdits logements pouvant être sous forme d'évidements ou fenêtres individuels (1a) répartis circonférentiellement ou sous forme d'une rainure annulaire (1b).

15. Procédé de montage et de mise en place d'un roulement de butée de suspension destiné à être placé entre une coupelle supérieure fixe (1) solidaire de la carrosserie d'un véhicule et une coupelle inférieure (2) mobile en rotation servant d'appui à un ressort de suspension entourant un cylindre d'amortisseur du véhicule, ledit roulement comprenant une bague supérieure (3), une bague inférieure (4), des billes de roulement (5) disposées entre les bagues supérieure et inférieure, une cage (6) pour les billes, et un élément (7) de solidarisation axiale des deux bagues, dans lequel on moule, par injection, une pièce en matériau plastique pouvant être déformée élastiquement, formant l'élément (7) de solidarisation en forme de fourreau sensiblement cylindrique muni de moyens intérieurs d'accrochage et la cage (6) reliée par des plots de liaison (14), on monte la pièce moulée constituée de la cage (6) et du fourreau (7) sur la bague supérieure (3) en emmanchant à force le fourreau sur la bague supérieure jusqu'à ce que celle-ci bute axialement sur la lèvre annulaire inférieure (11) du fourreau, on introduit les billes de roulement (5) dans les alvéoles de la cage (6), on assemble la bague inférieure (4) par poussée axiale pour séparer la cage du fourreau en rompant les plots de liaison (14) et on emmanche à force l'ensemble ainsi obtenu sur un bord de la coupelle supérieure (1), caractérisé en ce que les plots de liaison (14) étant répartis circonférentiellement entre le bord intérieur d'une lèvre annulaire radiale (11) qui s'étend vers l'intérieur du fourreau (7) et un bord extérieur de la cage (6), l'emmanchement du fourreau (7) sur la bague superieure (3) s'effectue autour du bord extérieur de la bague supérieure (3), l'élément de solidarisation étant muni de moyens d'accrochage (9, 9a) qui viennent maintenir la bague supérieure (3) par déformation élastique autour de son bord extérieur, et en ce que l'ensemble ainsi obtenu est emmanché sur un bord intérieur de la coupelle supérieure (1) par déformation élastique du fourreau qui maintient en place le roulement dans la coupelle supérieure.

## Claims

1. Rolling thrust bearing for vehicle suspension, including an upper race (3), a lower race (4), bearing balls (5) arranged between the upper and lower races, a cage (6) for the balls and an element (7) for securing the two races together axially, the said bearing being intended to be placed between a stationary upper spring plate (1) secured to the bodywork of the vehicle and a lower spring plate (2) which can move in terms of rotation, acting as a rest for a suspension spring surrounding a shock absorber tube of the vehicle, the securing element (7) having the form of a substantially cylindrical sleeve (7) including internal catching means (9, 9a) which, after the said sleeve has been force-fitted around the outer edge of the upper race (3), allow the said sleeve to be secured axially to the upper race, it also being necessary for the sleeve to be force-fitted inside the inner edge of the upper spring plate (1) in order axially to retain the thrust bearing therein,
characterized in that the securing element (7) is made of a plastic which can be elastically deformed,
in that the sleeve is force-fitted around the outer edge of the outer race and the sleeve is force-fitted inside the inner edge of the upper spring plate by elastic deformation of the sleeve, the catching means (9, 9a) axially securing the sleeve to the upper race (3) through their elastic deformation around the outer edge thereof, and in that the cage (6) and the sleeve (7) can be produced as a single piece by injection-moulding of a plastic, the cage and the sleeve being linked by linking tags (14) distributed circumferentially between the outer edge of the cage and the inner edge of an inner radial annular lip (11) at the lower end of the sleeve, the linking tags being broken upon assembly of the lower race (4).

2. Rolling bearing according to Claim 1, characterized in that the inner catching means of the sleeve (7) are produced in the form of individual spurs (9a) extending radially towards the inside of the sleeve and distributed circumferentially at the inner surface of the sleeve.

3. Rolling bearing according to Claim 1, characterized in that the inner catching means of the sleeve (7) are produced in the form of an annular internal bulge (9).

4. Rolling bearing according to one of the preceding claims, characterized in that the sleeve (7) has radial elastic deformation in its thickness when it is fitted between the upper race (3) and the upper spring plate (1).

5. Rolling bearing according to one of Claims 1 to 3, characterized in that the sleeve (7) includes outer elastic catching elements (10, 10a, 10b) on its outer surface.

6. Rolling bearing according to Claim 5, characterized in that the outer elastic catching elements of the sleeve (7) are produced in the form of individual spurs or protrusions (10, 10a) distributed circumferentially at the outer surface of the sleeve in order to allow it to be force-fitted into the upper spring plate (1).

7. Rolling bearing according to Claim 5, characterized in that the outer elastic catching elements of the sleeve (7) are produced in the form of an annular external bulge.

8. Rolling bearing according to one of the preceding claims, characterized in that the inner means and/or the outer elastic catching elements are situated close to the upper end of the sleeve (7).

9. Rolling bearing according to one of the preceding claims, characterized in that the internal radial annular lip (11) of the lower end of the sleeve (7) has an axial stop for the movement of fitting the sleeve (7) on the upper race (3).

10. Rolling bearing according to one of the preceding claims, characterized in that the lower end of the sleeve (7) including the internal annular lip (11) forms a seal with the lower spring plate (2).

11. Rolling bearing according to Claim 9 or 10, characterized in that the internal radial annular lip (11) of the sleeve (7) prevents the axial detachment of the inner race (4) from the upper race (3).

12. Rolling bearing according to one of the preceding claims, characterized in that the cage (6) has an outer sealing lip (12) and a lower sealing lip (13) which seal the bearing balls (5) against the outside of the bearing.

13. Rolling bearing according to one of the preceding claims, characterized in that the sleeve (7) includes axial slits (7a) produced between the upper end of the sleeve and the base of the annular internal bulge (9).

14. Rolling thrust bearing assembly comprising a stationary upper spring plate (1) secured to the bodywork of the vehicle, a lower spring plate (2) which can move in terms of rotation, acting as a rest for a damping spring of the vehicle and a rolling thrust bearing according to one of Claims 5 to 7, characterized in that the upper spring plate (1) is provided in its inner fitting edge with housings for the outer elastic catching elements of the sleeve (7) of the thrust bearing, it being possible for the said housings to be in the form of individual apertures or recesses (1a) distributed circumferentially or in the form of an annular groove (1b).

15. Method of assembling and fitting a suspension rolling thrust bearing intended to be placed between a stationary upper spring plate (1) secured to the bodywork of a vehicle and a lower spring plate (2) which can move in terms of rotation, acting as a rest for a suspension spring surrounding a shock absorber tube of the vehicle, the said bearing comprising an upper race (3), a lower race (4), bearing balls (5) arranged between the upper and lower races, a cage (6) for the balls and an element (7) for securing the two races together axially, in which method a component which can be elastically deformed is injection-moulded in plastic, thus forming the securing element (7) in the form of a substantially cylindrical sleeve equipped with inner catching means and the cage (6) connected by linking tags (14), the moulded component consisting of the cage (6) and of the sleeve (7) is mounted on the upper race (3) by force-fitting the sleeve over the upper race until the latter comes axially up against the lower annular lip (11) of the sleeve, the bearing balls (5) are introduced into the cavities of the cage (6), the lower race (4) is assembled by pushing axially in order to separate the cage from the sleeve by breaking the linking tags (14), and the whole thus obtained is force-fitted over an edge of the upper spring plate (1), characterized in that with the linking tags (14) distributed circumferentially between the inner edge of a radial annular lip (11) which extends towards the inside of the sleeve (7) and an outer edge of the cage (6), the sleeve (7) is fitted over the upper race (3) around the outer edge of the upper race (3), the securing element being equipped with catching means (9, 9a) which will hold the upper race (3) by elastic deformation around its outer edge, and in that the whole thus obtained is fitted over an inner edge of the upper spring plate (1) by elastic deformation of the sleeve which holds the bearing in place in the upper spring plate.

## Patentansprüche

1. Drucklager für die Radaufhängung für ein Fahrzeug, mit einem oberen Lagerring (3), mit einem unteren Lagerring (4), mit zwischen dem oberen und dem unteren Lagerring angeordneten Kugellagerkugeln (50), mit einem Kugellagerkäfig (6) und mit einem Glied (7) zur axialen Sicherung der beiden Lagerringe aneinander, wobei das Kugellager dazu vorgesehen ist, zwischen einem oberen festen Abstützteller (1), der an der Fahrzeugkarosserie angebracht ist, und einem unteren drebbeweglichen Abstützteller (2) angeordnet zu werden, der als Anlage für eine Radaufhängungsfeder dient, die einen Teleskopstoßdämpfer umgibt, wobei das Sicherungsglied (7) die Gestalt eines im Wesentlichen zylindrischen Mantels (7) aufweist, der innere Verankerungsmittel (9, 9a) trägt, durch die die axiale Sicherung des Mantels auf dem oberen Lagerring hergestellt werden kann, nachdem der Mantel mit Kraft auf den Außenrand des oberen Lagerrings (3) aufgesteckt ist und der Mantel in gleicher Weise mit Kraft in den Innenrand des oberen Abstütztellers eingesteckt wurde, um die axiale Sicherung des Drucklagers in letzterem sicherzustellen,
dadurch gekennzeichnet, dass das Sicherungsglied (7) aus einem elastisch verformbaren Kunststoffmaterial besteht,
dass das Aufstecken des Mantels unter Kraft auf den Außenrand des äußeren Lagerrings und das Einstecken des Mantels unter Kraft in den Innenrand des oberen Abstütztellers durch elastische Verformung des Mantels erreicht wird, wobei die Verankerungsmittel (9, 9a) die axiale Sicherung des Mantels an dem oberen Lagerring (3) durch ihre elastische Deformation an dem oberen Rand erbringen, und dadurch, dass der Käfig (6) und der Mantel (7) als einstückiges Spritzteil durch Einspritzen eines Kunststoffmaterials hergestellt werden können, dass der Käfig und der Mantel durch Verbindungsstege (14) miteinander verbunden sind, die in Umfangsrichtung verteilt zwischen dem Außenrand des Käfigs und dem Innenrand einer inneren, radialen und ringförmigen Lippe an dem unteren Ende des Mantels verteilt sind, wobei die Verbindungsstege bei der Montage des unteren Lagerrings (4) aufgetrennt werden.

2. Lager nach Anspruch 1, dadurch gekennzeichnet, dass die inneren Verankerungsmittel des Mantels (7) in Form von einzelnen Vorsprüngen (9a) ausgeführt sind, die sich von dem Mantel radial nach innen erstrecken und längs der Innenfläche des Mantels in Umfangsrichtung voneinander beabstandet sind.

3. Lager nach Anspruch 1, dadurch gekennzeichnet, dass die inneren Verankerungsmittel des Mantels (7) in Form einer ringförmigen inneren Wulst ausgebildet sind.

4. Lager nach einem der vorhergehenden Ansprüche, dadurch gekennzeichnet, dass der Mantel (7) bezüglich seiner Dicke eine elastische radiale Deformation zeigt, wenn er zwischen den oberen Lagerring (3) und den oberen Abstützteller eingesteckt ist.

5. Lager nach einem der Ansprüche 1 bis 3, dadurch gekennzeichnet, dass der Mantel (7) äußere elastische Verankerungselemente (10, 10a, 10b) an seiner Außenfläche trägt.

6. Lager nach Anspruch 5, dadurch gekennzeichnet, dass die äußeren elastischen Verankerungselemente des Mantels (7) in Form von Vorsprüngen oder einzelnen Fortsätzen (10, 10a) ausgeführt sind, die längs der Außenfläche des Mantels in Umfangsrichtung voneinander beabstandet sind, um ein kraftschlüssiges Einstecken in den oberen Abstützteller (7) zu ermöglichen.

7. Lager nach Anspruch 5, dadurch gekennzeichnet, dass die elastischen äußeren Verankerungselemente des Mantels (7) in Form einer äußeren ringförmigen Wulst ausgeführt sind.

8. Lager nach einem der vorhergehenden Ansprüche, dadurch gekennzeichnet, dass die äußeren elastischen Verankerungselemente und/oder -mittel in der Nähe des oberen Endes des Mantels (7) angeordnet sind.

9. Lager nach einem der vorhergehenden Ansprüche, dadurch gekennzeichnet, dass die radial sich erstreckende innere ringförmige Lippe (11) an dem unteren Ende des Mantels (7) einen axialen Anschlag für die Aufsteckbewegung des Mantels auf den oberen Lagerring (3) bildet.

10. Lager nach einem der vorhergehenden Ansprüche, dadurch gekennzeichnet, dass das untere Ende des Mantels (7), das die ringförmige innere Lippe (11) trägt, eine abgedichtete Verbindung mit dem unteren Abstützteller (2) bildet.

11. Lager nach den Ansprüchen 9 oder 10, dadurch gekennzeichnet, dass die radial sich erstreckende innere ringförmige Lippe (11) des Mantels (7) verhindert, dass der untere Lagerring (4) von dem oberen Lagerring (3) wegfallen kann.

12. Lager nach einem der vorhergehenden Ansprüche, dadurch gekennzeichnet, dass der Kugellagerkäfig (6) mit einer äußeren Dichtlippe (12) und einer inneren Dichtlippe (13) versehen ist, die die Abdichtung der Kugellagerkugeln (5) gegenüber der Umgebung des Kugellagers sicherstellen.

13. Lager nach einem der vorhergehenden Ansprüche, dadurch gekennzeichnet, dass der Mantel (7) axiale Schlitze (7a) aufweist, die zwischen dem oberen Ende des Mantels und der Basis des inneren ringförmigen Wulstes (9) vorgesehen sind.

14. Drucklageranordnung mit einem festen Abstützteller (1), der an der Karosserie des Fahrzeugs befestigt ist, mit einem unteren drehbeweglichen Abstützteller (2), der als Anlage für eine Dämpfungsfeder des Fahrzeugs dient, und mit einem Drucklager gemäß einem der Ansprüche 5 bis 7, dadurch gekennzeichnet, dass der obere Abstützteller (1) an seinem inneren Rand mit Rastausnehmungen für die äusseren elastischen Verankerungsglieder des Mantels (7) des Drucklagers versehen ist, wobei die Ausnehmungen in Form von einzelnen Vertiefungen oder Fenstern (1a), die in Umfangsrichtung voneinander beabstandet sind, oder in Form einer ringförmigen Nut (1b) ausgeführt sein können.

15. Verfahren zur Montage und zum Anbringen eines Drucklagers für eine Radaufhängung, das dazu vorgesehen ist, zwischen einem oberen festen Abstützteller (1), der an der Karosserie eines Fahrzeugs befestigt ist, und einem unteren drehbaren Abstützteller (2) angeordnet zu werden, der als Anlage für eine Radaufhängungsfeder dient, die einen Teleskopstoßdämpfer des Fahrzeugs umgibt, wobei das Lager einen oberen Lagerring (3), einen unteren Lagerring (4), zwischen dem oberen Lagerring und dem unteren Lagerring angeordnete Kugellagerkugeln (5), einen Kugellagerkäfig (6) und ein axiales Sicherungsglied (7) für die beiden Lagerringe aufweist, bei dem durch Spritzgießen aus elastisch verformbaren Kunststoffmaterial ein Teil hergestellt wird, das das Sicherungsglied (7) in Gestalt eines im Wesentlichen zylindrischen Mantels, der mit inneren Verankerungsmitteln versehen ist, und den mittels Verbindungsstegen (14) damit verbundenen Kugellagerkäfig (6) bildet, bei dem das gespritzte Teil, das den Käfig (6) und den Mantel (7) bildet, auf dem oberen Lagerring (3) montiert wird, indem der Mantel auf den oberen Lagerring mit Kraft aufgesteckt wird, bis er in axialer Richtung an die untere ringförmige Lippe (11) des Mantels anstößt, bei dem die Kugellagerkugeln (5) in die Sitze des Kugellagerkäfigs (6) eingesetzt werden, bei dem der untere Lagerring (4) durch axiales Eindrücken montiert wird, um den Kugellagerkäfig unter Auftrennen der Verbindungsstege (14) von dem Mantel zu trennen, und bei dem die so erhaltene Anordnung mit Kraft in einen Rand des oberen Abstütztellers (1) eingesteckt wird, dadurch gekennzeichnet, dass die Verbindungsstege (14) zwischen dem inneren Rand einer radial sich erstreckenden ringförmigen Lippe (11), die sich zum Inneren des Mantels (7) erstreckt, und dem Außenrand des Kugellagerkäfigs (6) in Umfangsrichtung voneinander beabstandet sind, dass das Aufstecken des Mantels (7) auf den oberen Lagerring (3) um den Außenrand des oberen Lagerrings (3) erfolgt, dass das Sicherungsglied mit Verankerungsmitteln (9, 9a) versehen ist, die den oberen Lagerring (3) durch elastisches Umgreifen eines Außenrands festhalten, und dass die so erhaltene Anordnung in einen Innenrand des oberen Abstütztellers (1) durch elastische Verformung des Mantels eingesteckt wird, der das Lager in dem oberen Abstützteller an Ort und Stelle hält.
